# EUROPÄISCHE PATENTANMELDUNG

(11) **EP 3 339 604 A1**
(43) Veröffentlichungstag der Anmeldung: **27.06.2018**
(21) Anmeldenummer: 17001826.1
(22) Anmeldetag: 08.11.2017
(51) Int. Cl.: F02B 75/20, F02F 7/00, F02B 75/22

(54) **BRENNKRAFTMASCHINE MIT TEILWEISER KOLBENSCHRÄNKUNG**

(30) Priorität: 20.12.2016 DE 102016015112
(71) Anmelder: DEUTZ Aktiengesellschaft, 51149 Köln (DE)
(72) Erfinder: Boemer, Andreas, 51149 Köln (DE); Reuter, Harald, 51067 Köln (DE); Lemme, Werner, 51503 Rösrath (DE)

(57) **Zusammenfassung**

1. Brennkraftmaschine mit teilweiser Kolbenschränkung
2. Hubkolbenbrennkraftmaschine mit einer Reihe von parallel angeordneten Zylindern, die mittels eines gemeinsamen in einer Kurbelwellenlagerung gelagerten Kurbeltriebs über Pleuel und Kolben verbunden sind, wobei die Kurbelwellenlagerung des Kurbeltriebs zur Zylinderachse einen Versatz aufweisen kann.

## Beschreibung

Die Erfindung betrifft eine Brennkraftmaschine mit teilweiser Kolbenschränkung, die zu einem verkürzten Motor führt.

Eine bekannte Möglichkeit zur Reduzierung der Reibungskräfte und damit zur Verbrauchsreduzierung ist das Schränken von Kurbeltrieben, der Versatz der Zylinder zur Mitte Kurbelwelle. Dabei wird die Zylinderachse gegenüber der Kurbelwelle um einige Millimeter versetzt.

In MTZ 51 (1990) 10, S. 410 ff. wird der VR 6 -Motor von VW mit Schränkung offenbart, die zu einer Gehäuseverkürzung führt.

Ein symmetrisch geschränkter Kurbeltrieb für oben genannte VR 6 -Motoren ist auch aus MTZ 52 (1991) 3, S. 100 ff. bekannt.

Ein derartig kompakter Motor ist auch aus DE 197 16 274 B4 bekannt.

Weiter ist aus MTZ 62 (2001) 4, S. 280 ff. bekannt, kompakte V- bzw. W-Motoren zu bauen, die geschränkt ausgeführt sind.

Nachteilig daran ist, dass es schwierig ist, derartige Kurbelgehäuse zu bohren, da es zu schrägen Kolben und Köpfen führt. Die Zylinder stehen bei dieser Ausführung schräg zur Deckfläche des Zylinderkurbelgehäuses. Die Nachteile dieser Ausführung bestehen im nicht mit einem Reihenmotor zu vergleichenden Massen- bzw. Momentenausgleich, die durch die schräg stehenden Zylinder aufwändigere Bearbeitung und entsprechende Sonderteile, z. B. Kolben und Kopf.

Bei der Herstellbarkeit ist sowohl die Darstellung des Wassermantels, z. B. Kernausbildung zwischen den Zylindern, als auch die Wandstärke der Zylinderrohre für steigende Zünddrücke zu nennen. Folglich ist hier ein großer Zylinderabstand positiv zu sehen.

Andererseits ist die Gesamtlänge des Motors, also die Kompaktheit des Aggregates, ein sehr wichtiger Aspekt und hier ist ein möglichst kleiner Zylinderabstand positiv.

Aufgabe der vorliegenden Erfindung ist es, die oben genannten Nachteile zu vermeiden und ein Optimum zwischen den oben genannten Zylinderabständen zu finden.

Die Aufgabe wird durch eine Hubkolbenbrennkraftmaschine mit einer Reihe von parallel angeordneten Zylindern, die mittels eines gemeinsamen in einer Kurbelwellenlagerung gelagerten Kurbeltriebs über Pleuel und Kolben verbunden sind, wobei die Kurbelwellenlagerung des Kurbeltriebs zur Zylinderachse einen Versatz aufweisen kann, gelöst.

Weiter ist erfindungsgemäß vorgesehen, dass der Versatz des Kurbeltriebs auf der Druckseite angeordnet ist, was Vorteile bei den Kolbenseitenkräften und der Kolbenschaftreibung hat.

In einer anderen vorteilhaften Ausgestaltung ist vorgesehen, dass der Versatz auf der Gegendruckseite angeordnet ist.

Erfindungsgemäß ist vorgesehen, dass jeder zweite Zylinder bzw. dessen Zylinderachse einen Versatz zur Kurbelwellenlagerung aufweist. Wird nur jeder zweite Zylinder geschränkt, wird zwar nur die Hälfte des Verbrauchsminderungspotentials genutzt, aber die Länge des Motors kann verringert werden. Das kann von entscheidendem Vorteil sein, wenn ein Motor in den vorhandenen Bauraum einer Maschine passen muss.

Weiter ist erfindungsgemäß vorgesehen, dass die Zylinder in Längsrichtung der Brennkraftmaschine betrachtet im Wechsel einen positiven und anschließend einen negativen Versatz aufweisen. Als Weiterführung dieser Idee können die hier ungeschränkten Zylinder auch eine negative Schränkung erhalten. Dadurch kann der Motor weiter verkürzt werden.

In einer anderen vorteilhaften Weiterbildung ist vorgesehen, dass die Zylinder in Längsrichtung der Brennkraftmaschine betrachtet und bezogen auf die Kurbelwellenmitte außermittig angeordnet sind.

Eine erfindungsgemäße Weiterbildung sieht vor, dass die mittels Kolbenbolzen mit dem Pleuel verbundenen Kolben derart angeordnet sind, dass der Kolbenbolzen außerhalb der Kolbenmittelebene angeordnet ist.

Weiter ist erfindungsgemäß vorgesehen, dass die mittels Kolbenbolzen mit dem Pleuel verbundenen Kolben derart angeordnet sind, dass der Kolbenbolzen außerhalb der Kolbenmittelebene auf der Gegendruckseite angeordnet ist.

Eine andere vorteilhafte Weiterbildung sieht vor, dass die mittels Kolbenbolzen mit dem Pleuel verbundenen Kolben derart angeordnet sind, dass der Kolbenbolzen außerhalb der Kolbenmittelebene auf der Druckseite angeordnet ist.

Weitere Vorteile und Merkmale der Erfindung ergeben sich aus dem nachfolgend erläuterten Ausführungsbeispiel. Es zeigen:
- Figur 1: Kurbelschränkung und ihren Einfluss auf die Reibung
- Figur 2: ungeschränker oder gleichmäßig geschränkter Kurbeltrieb
- Figur 3: Kurbeltrieb mit jedem zweiten Zylinder geschränkt
- Figur 4: vergrößerte Darstellung von Figur 3
- Figur 5: Kurbelschränkung mit positivem und negativem Versatz.

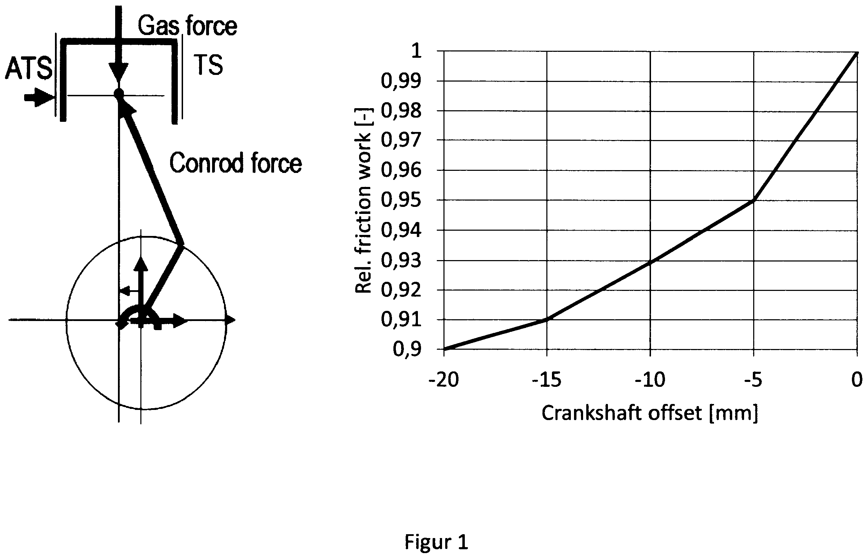

Bei einem geschränkten Kurbeltrieb wie in Figur 1 dargestellt befindet sich die Achse der Kurbelwelle nicht mehr in der Zylinderlängsachse, sondern wird seitlich versetzt angeordnet. Eine Schränkung kann in Richtung der Druck- oder Gegendruckseite ausgeführt werden, die druckseitige Schränkung wird als positiv eingeschätzt. Durch die Schränkung ergibt sich ein geänderter Bewegungs- und Belastungsverlauf des Kurbeltriebs. Eine Schränkung hin zur Druckseite des Kolbens bewirkt eine geringere Schrägstellung des Pleuels während des Verbrennungstaktes, dadurch werden die Kolbenseitenkräfte und somit die Kolbenschaftreibung reduziert. Entgegengesetzt dazu führt eine gegendruckseitige Schränkung zu einer erhöhten Kolbenschaftreibung. Als Desaxierung wird die Versetzung des Kolbenbolzens aus der Kolbenmittenebene bzw. aus der Zylindermittenebene bezeichnet. Wie bei der Schränkung kann in Richtung der Druck- oder Gegendruckseite des Kolbens desaxiert werden, die Desaxierung hin zur Druckseite des Kolbens wird wie die Schränkung als positiv festgelegt. Als Desaxierung bezeichnet man den Versatz der Kolbenbolzenachse. Die Schränkung und die Desaxierung haben gleiche Auswirkungen auf den Kolbenweg, daher müssen die Desaxierung und die Schränkung für die Berechnung des Kolbenwegs immer gemeinsam berücksichtigt werden.

Die Schränkung zur Druckseite des Kolbens wurde als "positiv" definiert.

Auch für die Desaxierung wurde der Versatz zur Druckseite als "positiv" definiert.

Eine Desaxierung wirkt sich wie zur Schränkung auf den Bewegungsverlauf aus. Durch die gegendruckseitige Desaxierung bewegt sich der Kolben mehr in der Zylindermitte, dies bewirkt eine verbesserte Dichtwirkung der Kolbenringe und wirkt dem Ansatz von Ölkohle im Bereich des Feuerstegs entgegen. Diese Art des Desaxierens wird als thermisches Desaxieren bezeichnet. Durch eine druckseitige Desaxierung, als Geräuschdesaxierung bezeichnet, wird ein zusätzliches Moment am Kolben erzeugt. Dies verändert den Verlauf der Gleitbahnkraft und bewirkt einen Anlagewechsel des Kolbens schon vor dem oberen Totpunkt (OT). Durch die Desaxierung wird vor OT ein Moment auf den Kolben ausgewirkt. Dies bewirkt eine Kippbewegung des Kolbens, der untere Kolbenschaft legt sich vor dem OT auf der Druckseite an. Eine Desaxierung um 0,5 bis 2 % des Kolbendurchmessers führt zu einem früheren Anlagewechsel. Dadurch kann das Kolbenkippgeräusch vermindert werden. Anders als die Schränkung wird die Desaxierung im Zehntel-Millimeter Bereich realisiert. Schränkung und Desaxierung können alleine oder aber in einer Kombination aus beiden Verfahren ausgeführt werden. Dadurch können die beschriebenen Effekte je nach Anwendungsfall in gewünschter Weise kombiniert werden. Eine zusätzliche Desaxierung des versetzten Kurbeltriebs beeinflusst den Abstand des Kolbenbolzens vom Mittelpunkt der Kreisbahn des großen Pleuelauges. Wird die Desaxierung in Richtung des Versatzes ausgeführt, verringert sich der beschriebene Abstand. Dies bewirkt eine Annäherung an die Bewegung eines herkömmlichen Kurbeltriebs. Somit entspricht eine versatzseitige Desaxierung einer Kürzung der Länge des Versatzes und bewirkt daher eine Verminderung aller durch den Versatz hervorgerufenen Veränderungen. Eine Desaxierung entgegen der Versatzrichtung führt zu einer Vergrößerung des Abstandes zwischen Kolbenbolzen und Kreisbahnmittelpunkt des großen Pleuelauges und führt folglich zur Verstärkung der Auswirkungen eines versetzten Kurbeltriebs.

Der Abstand der Zylinder eines Verbrennungsmotors hat Einfluss auf einige Kenngrößen des Motors. Dies sind u. a. Gesamtlänge des Motors, Herstellbarkeit der Bauteile, Haltbarkeit der Bauteile. Beispielhafterweise sei hier das Zylinderkurbelgehäuse genannt.

Eine Kombination von Schränkung und Desaxierung nutzt die Effekte des Desaxierens, die Reduzierung des Kolbenkippgeräusches oder die Erhöhung der Kolbenringdichtfähigkeit als Folge der exzentrischen Krafteinbringung in den Kolbenbolzen, die durch eine Schränkung alleine nicht erreicht werden kann. Effekte, die mit einem geänderten Kolbenweg und dem sich dabei ändernden Pleuelstangenwinkel vor oder nach OT erzielt werden können, sind durch die geometrische Begrenzung des Desaxierungsmaßes im Kolben nicht in der Weise möglich, die eine Schränkung bietet. Auf die Kolben/Pleuelgruppe entfallen etwa 40 - 50 % der Gesamtreibung des Dieselmotors.

Die Reibung der Kolben/Pleuelgruppe setzt sich aus der Reibung im Pleuellager, der Reibung der Pendelbewegung des Kolbenbolzens, aus der Kolbenringreibung und der Reibung des Kolbenschaftes an der Zylinderlaufbuchse zusammen. Die Kolbenschaftreibung ist eine Funktion des Reibbeiwertes und damit von Materialpaarung, Ölviskosität und Gleitgeschwindigkeit und eine Funktion der Seitenführungskraft bzw. der Kolbennormalkraft, die sich aus dem Zylinderdruck und der Massenkraft der oszillierenden Massen bei Schrägstellung des Pleuels zur jeweiligen Kurbelwellenstellung errechnet. Die Gesamtreibung der Kolben/Pleuelgruppe ist zum wesentlichen Teil durch die Reibung des Kolbenhemdes an der Zylinderwand bestimmt, welche von der Kolbennormalkraft und den Reibungsverhältnissen abhängt. Die Kolbennormalkraft wiederum ergibt sich aus der resultierenden Kolbenkraft - Summe aus Gas- und Massenkraft - und dem Winkel durch die Schrägstellung des Pleuels. Eine druckseitige Schränkung führt zu einer geringeren Pleuelauslenkung nach OT und reduziert somit die Kolbennormalkraft während der Expansionsphase. Während der Kompression wird diese aufgrund der größeren Schrägstellung des Pleuels erhöht. Das Potenzial zur Reibungsminderung ist von der Gas- und der Massenkraft am Kolben abhängig. Je nach Verhältnis der von Last und Drehzahl abhängigen Gas- zur Massenkraft am Kolben ergeben sich unterschiedliche Auswirkungen auf die Reibung durch die Kolbennormalkraft. Der reibungsmindernde Effekt erhöht sich mit steigendem Zylinderdruck und sinkt mit wachsender Drehzahl. Bei Volllast führt eine Schränkung von etwa 14 mm zum größten Reibungsgewinn der Kolben/Pleuelgruppe. Für den Teillastbetrieb liegt das hinsichtlich Reibungsreduktion optimale Schränkungsmaß bei etwa 8 mm. Als wirksamer Kompromiss kann daher ein Schränkungsmaß von 10 - 12 mm.

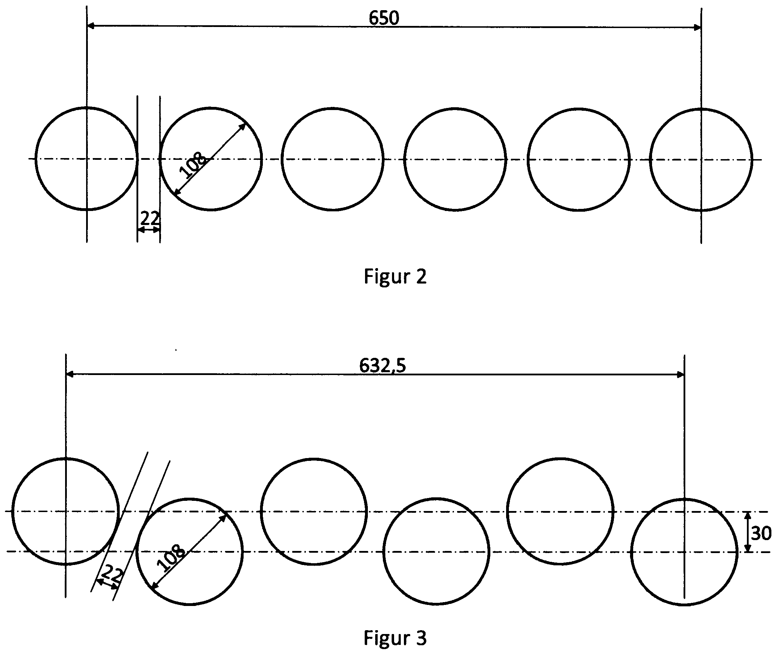

Figur 2 zeigt einen ungeschränken oder gleichmäßig geschränkten Kurbeltrieb. Bei der vorliegenden Erfindung wird ein 4- und/oder 6- Zylinder-Reihenmotor vorgeschlagen, der eine möglichst kurze Einbaulänge aufweist, aber eine Herstellbarkeit entsprechend einem größeren Zylinderabstand ermöglicht. Bezogen auf den Zylinderabstand wird ein kleinerer Lagerabstand der Kurbelwellenlager benötigt. Dargestellt wird das durch eine Ausführung des Zylinderkurbelgehäuses mit einer Zylinderanordnung, bei der die Zylindermitte der Zylinder nicht auf der Kurbelwellenmitte, sondern um einige Millimeter versetzt dazu angeordnet sind. Da die Zylindermitten der Nachbarzylinder gegenseitig zur Kurbelwellenmitte versetzt sind, ergibt sich so ein größerer Abstand zwischen den Zylinderdurchmesser, verglichen mit den Lagerabständen der Kurbelwellenlager.

In Figur 3 wird ein Kurbeltrieb dargestellt, bei dem jeder zweite Zylinder geschränkt ist.

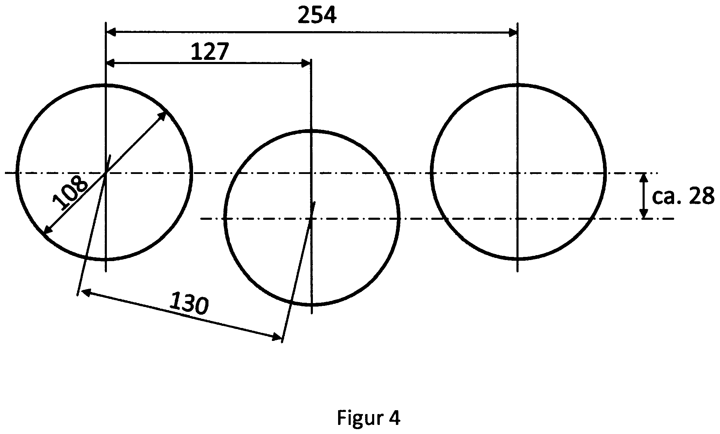

Figur 4 zeigt eine vergrößerte Darstellung von Figur 3 und erläutert die Anordnung an einem Maßbeispiel, bei dem der motorlängenbestimmende Lagerabstand mit 127 mm ausgeführt, der Zylinderabstand aber mit 130 mm gewählt wurde.

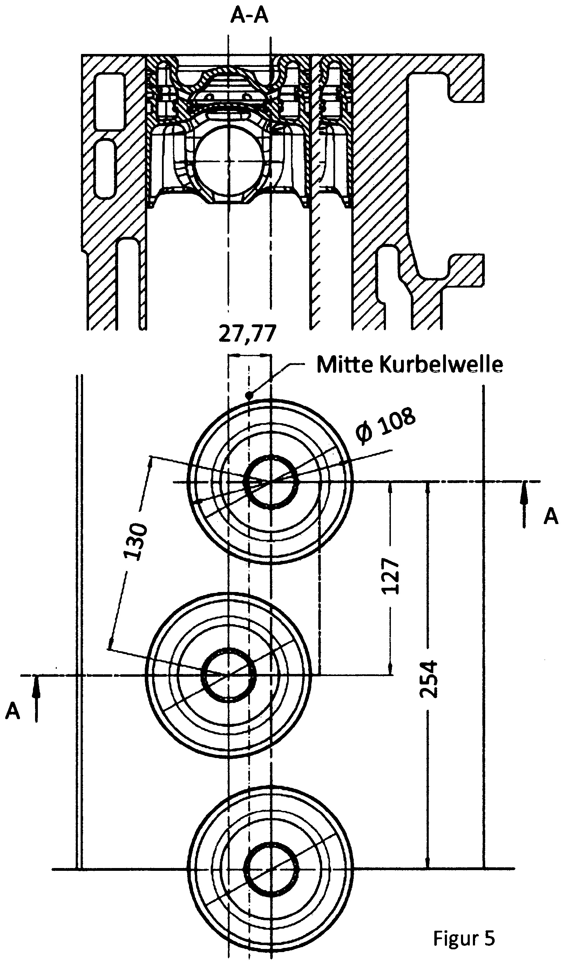

In Figur 5 wird eine Kurbelschränkung mit positivem und negativem Versatz insbesondere entlang der Schnittlinie A-A dargestellt. Für die Motorlänge sind die Lagerabstände entscheidend, für die Herstellbarkeit und Haltbarkeit ist der Zylinderabstand entscheidend. Die Zylinder verlaufen parallel, somit entsteht nicht, wie bei V-Motorausführung ein zusätzlicher Bedarf zur Erzielung der Laufruhe des Motors. Bei der vorliegenden Erfindung muss die Mitte Kurbelwelle nicht mittig durch die versetzten Zylinder verlaufen. Ein einseitiger Versatz, z. B. Zylinderreihe 1 Versatz + 18 mm und Zylinderreihe 2 Versatz -10 mm, kann verlustreibungstechnische Vorteile bringen. Der Versatz der Zylinder im konkreten Beispiel von Figur 5, etwa 28 mm, kann, wie oben beschrieben, aufgeteilt werden. Der größere Zylinderabstand bringt auch im Zylinderkopf und bei der Zylinderkopfdichtung weitere Vorteile hinsichtlich konstruktiver Freiheitsgrade.

## Patentansprüche

1. Hubkolbenbrennkraftmaschine mit einer Reihe von parallel angeordneten Zylindern, die mittels eines gemeinsamen in einer Kurbelwellenlagerung gelagerten Kurbeltriebs über Pleuel und Kolben verbunden sind, wobei die Kurbelwellenlagerung des Kurbeltriebs zur Zylinderachse einen Versatz aufweisen kann.

2. Hubkolbenbrennkraftmaschine nach Anspruch 1,
**dadurch gekennzeichnet, dass** der Versatz auf der Druckseite angeordnet ist.

3. Hubkolbenbrennkraftmaschine nach einem oder mehreren der vorgenannten Ansprüche,
**dadurch gekennzeichnet, dass** der Versatz auf der Gegendruckseite angeordnet ist.

4. Hubkolbenbrennkraftmaschine nach einem oder mehreren der vorgenannten Ansprüche,
**dadurch gekennzeichnet, dass** jeder zweite Zylinder bzw. dessen Zylinderachse einen Versatz zur Kurbelwellenlagerung aufweist.

5. Hubkolbenbrennkraftmaschine nach einem oder mehreren der vorgenannten Ansprüche,
**dadurch gekennzeichnet, dass** die Zylinder, in Längsrichtung der Brennkraftmaschine betrachtet, im Wechsel einen positiven und anschließend einen negativen Versatz aufweisen.

6. Hubkolbenbrennkraftmaschine nach einem oder mehreren der vorgenannten Ansprüche,
**dadurch gekennzeichnet, dass** die Zylinder, in Längsrichtung der Brennkraftmaschine betrachtet und bezogen auf die Kurbelwellenmitte, außermittig angeordnet sind.

7. Hubkolbenbrennkraftmaschine nach einem oder mehreren der vorgenannten Ansprüche,
**dadurch gekennzeichnet, dass** die mittels Kolbenbolzen mit dem Pleuel verbundenen Kolben derart angeordnet sind, dass der Kolbenbolzen außerhalb der Kolbenmittelebene angeordnet ist.

8. Hubkolbenbrennkraftmaschine nach einem oder mehreren der vorgenannten Ansprüche,
**dadurch gekennzeichnet, dass** die mittels Kolbenbolzen mit dem Pleuel verbundenen Kolben derart angeordnet sind, dass der Kolbenbolzen außerhalb der Kolbenmittelebene auf der Gegendruckseite angeordnet ist.

9. Hubkolbenbrennkraftmaschine nach einem oder mehreren der vorgenannten Ansprüche,
**dadurch gekennzeichnet, dass** die mittels Kolbenbolzen mit dem Pleuel verbundenen Kolben derart angeordnet sind, dass der Kolbenbolzen außerhalb der Kolbenmittelebene auf der Druckseite angeordnet ist.
